# EUROPÄISCHE PATENTSCHRIFT

(11) **EP 1 188 034 B1**
(45) Veröffentlichungstag und Bekanntmachung des Hinweises auf die Patenterteilung: **14.09.2005**
(21) Anmeldenummer: 00936619.6
(22) Anmeldetag: 13.04.2000
(51) Int. Cl.: G01B 7/30, G01D 5/14, G01C 1/00

(54) **MESSVORRICHTUNG ZUR BERÜHRUNGSLOSEN ERFASSUNG EINES DREHWINKELS**
MEASURING DEVICE FOR CONTACTLESSLY DETECTING AN ANGLE OF ROTATION
DISPOSITIF DE MESURE POUR DETECTER UN ANGLE DE ROTATION SANS CONTACT

(30) Priorität: 17.04.1999 DE 19917467
(43) Veröffentlichungstag der Anmeldung: 20.03.2002
(73) Patentinhaber: ROBERT BOSCH GMBH, 70442 Stuttgart (DE)
(72) Erfinder: KRIMMER, Erwin, D-73655 Pluederhausen (DE); REICHL, Asta, D-70499 Stuttgart (DE); KLOTZBUECHER, Thomas, D-70635 Rudersberg (DE); BAUER, Bernhard, D-70499 Stuttgart (DE)
(86) Internationale Anmeldenummer: PCT/DE2000/001142
(87) Internationale Veröffentlichungsnummer: WO 2000/063648

(56) Entgegenhaltungen:
- EP-A- 0 611 951
- WO-A-99/05475
- DE-U- 29 817 399

## Beschreibung

### Stand der Technik

Die Erfindung geht aus von einer Messvorrichtung zur berührungslosen Erfassung eines Drehwinkels nach der Gattung des Anspruchs 1. Aus der nachveröffentlichten DE-OS 197 53 775.8 ist ein Sensor bekannt, bei dem der Rotor und der Stator in zwei Ebenen übereinander angeordnet sind. Der Stator besteht aus zwei Teilen, zwischen denen sich ein Messspalt und ein Distanzspalt befinden. Auf dem Rotor, der mit einer Welle, dessen Drehbewegung bestimmt werden soll, verbunden ist, ist ein Magnet angeordnet. Hier ist aber eine genaue, exakte Zuordnung des Rotors, des Messelements und des Stators notwendig.

Die Dokumente DE 298 17 399 U1, EP 0 611 951 A2 und WO 99/05475 zeigen und beschreiben jeweils eine Messvorrichtung zur berührungslosen Erfassung eines Drehwinkels. Dabei besteht eine solche Messvorrichtung aus einem zweigeteilten Stator und einem mit einem Magneten versehenen Rotor. Sowohl zwischen Stator und Rotor als auch zwischen den beiden Statorteilen befinden sich jeweils magnetisch nicht leitende Spalte. Ein magnetempfindliches Element ist in einem Messspalt zwischen den beiden Statorteilen angeordnet.

### Vorteile der Erfindung

Die erfindungsgemäße Messvorrichtung zur berührungslosen Erfassung eines Drehwinkels mit den kennzeichnenden Merkmalen des Anspruchs 1 hat aufgrund der beanspruchten Anordnung der Enden des Stators und des magnetempfindlichen Elements gegenüber dem Stand der Technik den Vorteil, dass das Messelement den Arbeitsbereich nicht einschränkt und dass ein starker Magnetfluss bei Verwendung kleiner Magnete erreicht werden kann. Es ist ein messbarer Drehwinkel von bis zu 140°, bei einem linearen Ausgangssignal möglich. Die Messvorrichtung kann hierbei in einen so genannten Links- und Rechtsanbau, z.B. bei einem Fahrpedal vorgenommen werden. Dies bedeutet, daß der Sensor in einfacher Weise bei einem links- und rechtsgesteuerten Fahrzeug eingebaut werden kann. Der Rotor mit den Magneten kann sowohl über- als auch unterhalb des Stators eingebaut werden und dabei auch um 360° rotieren. In einfacher Weise kann durch die besondere Ausgestaltung des Stators eine Magnetflußkonzentration erreicht werden, wodurch das Meßsignal im magnetfeldempfindlichen Element verbessert wird. Ferner ist es möglich, bei starrer Leiterplatte und ebener Bauweise, den eigentlichen Meßspalt sehr schmal zu halten. Dies hat den Vorteil, daß durch den kleinen Meßspalt ein maximaler Magnetfluß bei kleinen Magneten erreicht werden kann. Der Meßspalt wird selbst nur durch die Dicke des eigentlichen Meßelements bestimmt. Ragen die Enden der beiden Statorteile übereinander hinaus, so wird ein konstanter Magnetfluß auch bei großen Fertigungstoleranzen erreicht.

Der Sensor ist aufgrund seines einfachen Aufbaus mit relativ geringem Montageaufwand in verschiedenen Systemen, wie z.B. einer Drosselmeßvorrichtung, eines Pedalmoduls für einen Brems- und Gaspedalwertgeber integrierbar oder als eigenständiger Sensor bei Drosselklappengebern oder einer Karosserieeinfederungsvorrichtung verwendbar.

Durch die in den abhängigen Ansprüchen aufgeführten Maßnahmen sind vorteilhafte Weiterbildungen und Verbesserungen der im Anspruch 1 angegebenen Meßvorrichtung möglich.

### Zeichnung

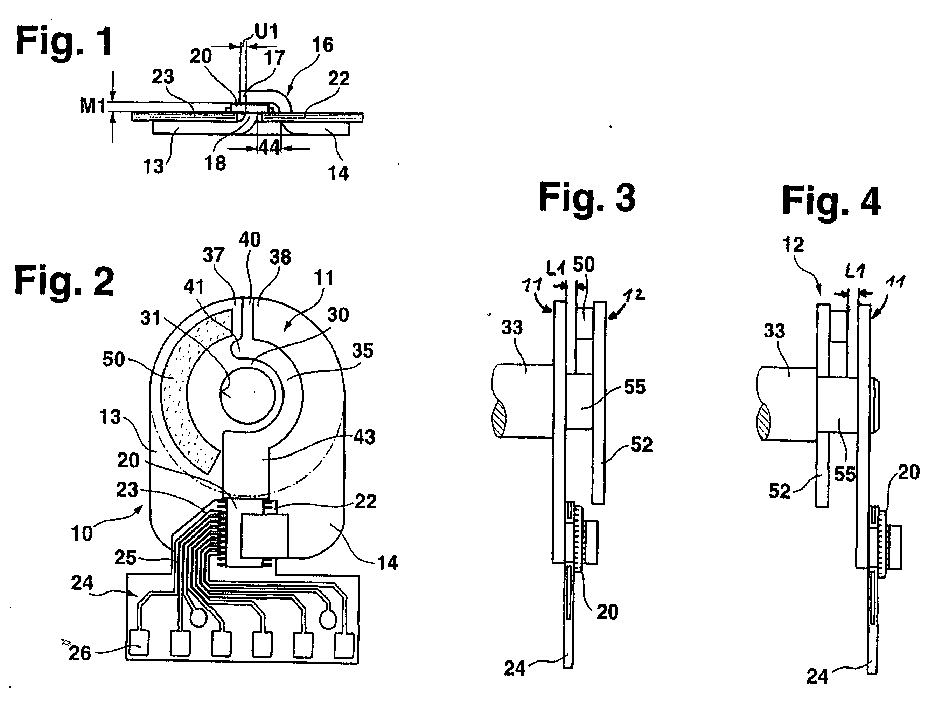

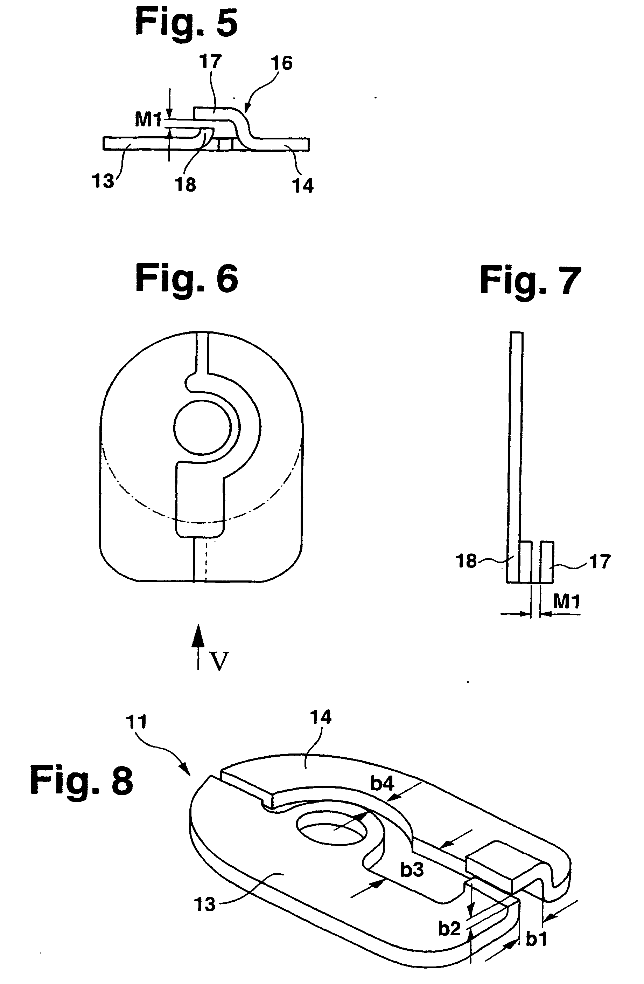

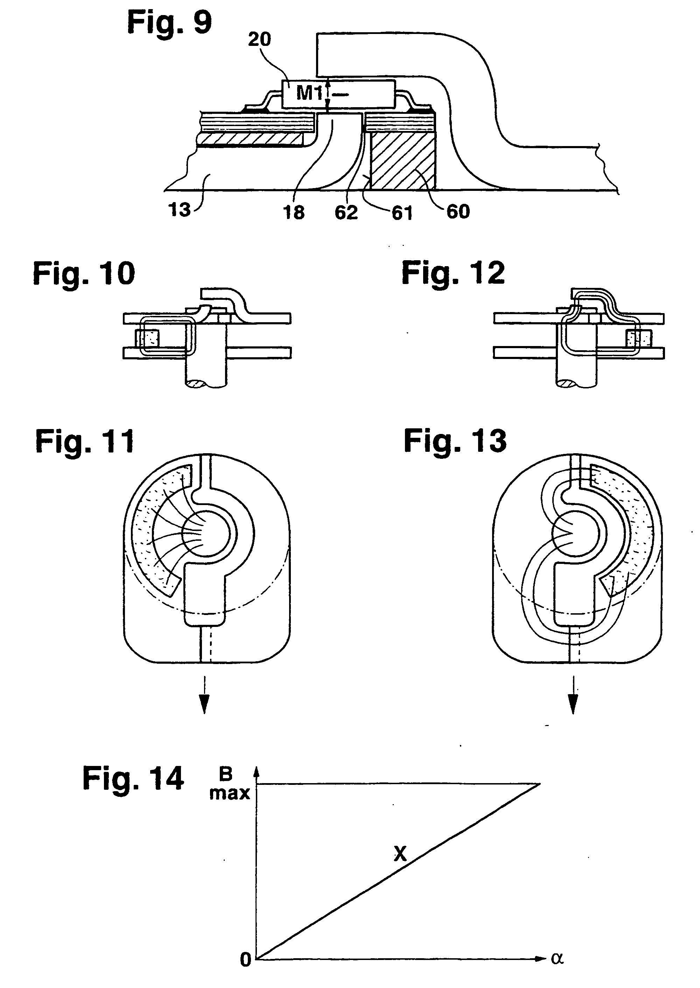

Ausführungsbeispiele der Erfindung sind in der Zeichnung dargestellt und in der nachfolgenden Beschreibung näher erläutert. Die Figur 1 zeigt einen Längsschnitt durch den Stator und die Leiterplatte im Bereich des Meßspaltes ohne Rotor. Figur 2 zeigt eine Draufsicht auf die Meßvorrichtung, wobei vom Rotor nur der darauf angeordnete Magnet eingezeichnet ist. Die Figuren 3 und 4 zeigen einen Längsschnitt in Richtung A-A nach Figur 2, wobei die Figur 3 den Schnitt nach der Figur 2 mit dem Rotor darstellt, der oberhalb des Stators angeordnet ist, die Figur 4 zeigt eine Alternative hierzu bei einem unterhalb des Stators angeordneten Rotor. Die Figuren 5 bis 8 zeigen den Stator in verschiedenen Darstellungen, wobei die Figur 6 eine Draufsicht auf den Stator darstellt, die Figur 5 eine Ansicht in Blickrichtung V, die Figur 7 eine Ansicht in Blickrichtung VII nach der Figur 6 und die Figur 8 eine perspektivische Darstellung des Stators. Die Figur 9 stellt eine Abwandlung des Bereichs um den Meßspalt mit Hall-IC und Leiterplatte in einer vergrößerten Darstellung dar. Die Figuren 10 und 11 zeigen den Magnetfluß bei einer Winkelstellung von 0° bzw. einer Induktion B=0, die Figuren 12 und 13 zeigen den entsprechenden Magnetfluß bei maximaler Winkelstellung bzw. bei einer Induktion B=max, die Figur 14 zeigt den entsprechenden Verlauf der Induktion B über den Drehwinkel α. In den Figuren 11 und 13 ist im Unterschied zu den Figuren 10 und 12 nur der Magnet ohne den für ihn dienenden Träger, d.h. den Rotor zur Vereinfachung eingezeichnet.

### Beschreibung der Ausführungsbeispiele

In den Figuren 1 bis 3 bzw. 4 ist mit 10 ein Sensor bezeichnet, der aus einem Stator 11 und einem Rotor 12 besteht. Wie aus der Figur 2 ersichtlich ist, besteht der Stator 11 aus zwei Teilen 13, 14, die durch verschieden breite Spalte voneinander getrennt sind. Aus der Figur 1 ist das wesentliche Merkmal der Erfindung erkennbar, daß die Enden der beiden Statorteile 13 und 14 in zwei Ebenen übereinander enden und sich dabei überlappen. Hierzu wird ein Ende 16 aus der Ebene des Statorteils 14 herausgebogen, so daß sein Ende 16 einen in einer parallel zur ersten Ebene verlaufenden Fortsatz 17 aufweist. Der Fortsatz 17 ist dabei so lang, daß er das Ende 18 des anderen Statorteils 13 überlappt. Hierzu ist das Ende 18 des Statorteils 13 aus der Ebene des Statorteils 13 herausgebogen, so daß die Stirnseite des Endes 18 zum Fortsatz 17 hin weist. Es wäre aber auch denkbar, daß das Ende 18 des Statorteils 13 nicht hochgebogen ist, sondern in der Ebene des Statorteils 13 bzw. in der Ebene des Statorteils 14 endet. Zwischen dem Ende 18 und dem Fortsatz 17 des Statorteils 14 befindet sich der Meßspalt M1. In der Figur 1 ragt der Fortsatz 17 über die Stirnseite des Fortsatzes 18 hinaus, so daß sich eine Überlappung U1 ergibt. Aufgrund dieser Überlappung U1 können beim Einbau des Stators in den Sensor 10 Toleranzprobleme ausgeglichen werden. Es wäre aber auch denkbar, daß der Fortsatz 17 bündig mit der dem Statorteil 14 abgewandten Seite des Endes 18, wie es z.B. in der Figur 5 dargestellt ist, endet. Im Spalt M1 ist ein magnetfeldempfindliches Element 20 angeordnet, das, wie weiter unten noch erläutert wird, die Änderung des magnetischen Flusses erfaßt. Als magnetfeldempfindliches Element 20 können z.B. Feldplatten, ein Magnettransistor, Spulen, magnetoresistive Elemente oder ein Hall-Element verwendet werden. Wichtig hierbei ist, daß das magnetfeldempfindliche Bauteil eine möglichst lineare Abhängigkeit seines Ausgangssignals von der magnetischen Induktion B aufweist. In den Figuren ist jeweils eine Messung mit Hilfe eines einzigen magnetfeldempfindlichen Elements, eines Hall-Elements dargestellt. In diesem Fall muß das Element 20 möglichst mittig im Spalt M1 angeordnet sein. Gegebenenfalls wäre es auch möglich, ein oder mehrere Meßelemente in den Meßspalt M1 zu plazieren, so daß eine sogenannte redundante Messung (Sicherheitsmessung) durchgeführt werden könnte. Die elektrischen Anschlüsse des Hallelements 20 sind auf den Fortsätzen 22, 23 einer Leiterplatte 24 angeordnet. Aus der Figur 2 sind die Leiterbahnen 25 der Leiterplatte 24 und die jeweiligen elektrischen Anschlüsse 26 erkennbar.

Das Statorteil 13 hat, wie in der Figur 2 dargestellt, einen Fortsatz 30, der eine Bohrung 31 aufweist, mit der das Statorteil 13 eine Welle 33 mit Spiel umgreift. Im Bereich dieses Fortsatzes 30 befindet sich zwischen den beiden Statorteilen 13, 14 ein erster Distanzspalt 35, der etwa einen Winkelbereich von 180° umfaßt. Der Distanzspalt 35 muß so groß sein, daß möglichst kein magnetischer Fluß in seinem Bereich zwischen den beiden Statorteilen 13, 14 möglich ist. Ferner ergibt sich zwischen den anderen Enden 37, 38 der beiden Statorteile 13, 14, d.h. die den Enden 18, 16 gegenüberliegenden Enden der Statorteile 13, 14, ein zweiter Distanzspalt 40. Der Übergang vom Distanzspalt 35 zum Distanzspalt 40 weist einen segmentartigen Fortsatz 41 auf, der in das Statorteil 13 hineinragt. Dann schließt sich am anderen Ende des Distanzspalts 35 ein dritter Distanzspalt 43 an, der in einen vierten Distanzspalt 44 übergeht. Der vierte Distanzspalt 44 befindet sich unterhalb des Fortsatzes 17 des Statorteils 14 und bezeichnet den Abstand der in einer Ebene liegenden Enden 16, 18 des Statorteils 13 und des Statorteils 14. Alle Distanzspalte können entweder mit Luft oder mit einem anderen magnetisch nicht leitendem Material ausgefüllt sein. Selbstverständlich ist es auch möglich, die Distanzspalte mit unterschiedlichem Material auszufüllen. Ausgehend von der Annahme, daß die Distanzspalte mit Luft gefüllt sind, muß der Distanzspalt 44 größer sein als der Meßspalt M1. Dies ist notwendig, so daß nur ein geringer, oder möglichst kein Magnetfluß über den Distanzspalt 44 fließen kann, sondern möglichst konzentriert über den Meßspalt M1 verläuft. Auch unter dem Gesichtspunkt des Magnetflusses muß der Distanzspalt 43 größer sein als der Distanzspalt 35. Auf jeden Fall sollte aber der Distanzspalt 43 möglichst annähernd so groß sein wie der Distanzspalt 44. In der Figur 2 ist zur Verdeutlichung und aus Übersichtlichkeitsgründen der Rotor 12 nur teilweise eingezeichnet. Es ist hier nur der Magnet 50, der den oben bereits mehrfach erwähnten Magnetfluß erzeugt, dargestellt. Der Magnet 50 ist in der Figur 2 als u-förmiger Abschnitt dargestellt, der vom Distanzspalt 40 bis zum Distanzspalt 43 ragt. In der Figur 2 ist er hier als durchgehendes ringförmiges Teil dargestellt. Soll die gemessene Meßkurve Plateaus oder andere nicht lineare Übergänge aufweisen, so kann der Magnet 50 aus mehreren Abschnitten bestehen, die durch mehr oder weniger große Abschnitte untereinander getrennt sind. Der Magnet kann als Permanentmagnet ausgebildet sein, der in Achsrichtung, d.h. senkrecht zum Stator 11 bzw. zu seiner Trägerplatte 52 polarisiert ist. Der Magnet 50 kann als Kreisausschnitt (Kreissegment) oder Teil eines Kreisrings ausgeführt sein. Sein Winkelbereich ist mindestens so groß, wie der zu bestimmende, maximale Drehwinkel des zu überwachenden bzw. des zu messenden Bauteils. Wie aus der Figur 2 ersichtlich ist, beträgt der Winkelbereich des Permanentmagneten 50 bei diesem Ausführungsbeispiel nahezu 180°, so daß ein zu messender Drehwinkel von 180° erreicht werden kann. In den Figuren 3 und 4 ist nun dargestellt, daß der Permanentmagnet 50 mit seiner Trägerplatte 52 oberhalb (wie auch in der Figur 2 angedeutet), d.h. wie in der Figur 3 dargestellt, oder auch unterhalb des Stators 11, wie in der Figur 4 dargestellt, angeordnet werden kann. Bei der in der Figur 3 dargestellten Anordnung (Rotor 12 bei einer Ebene oberhalb des Stators 11) ragt die Welle 33 durch die Öffnung 31 im Fortsatz 30 des Statorteils 13 hindurch, so daß am Ende der Welle 33 eine Trägerplatte 52 befestigt sein kann. Der Abstand zwischen dem Stator 11 und der Trägerplatte 52 muß dabei so groß sein, daß der auf der dem Stator zugewandten Seite der Trägerplatte 52 angeordnete Magnet 50 bei der Drehbewegung frei bewegen werden kann, d.h. zwischen der dem Stator 11 zugewandten Oberseite des Magneten 50 und dem Stator 11 muß ein Luftspalt L1 sich befinden, der aber während der Drehbewegung des Rotors 12 möglichst konstant sein soll. Der Durchmesser des Rotors 12, d.h. der Durchmesser der Trägerplatte 52 muß durch einen Luftspalt >M1 vom Ende 17 und 18 getrennt sein.

In der Figur 4 ist nun der Rotor 12 unterhalb des Stators 11 angeordnet. Die Ausbildung des Rotors 12 entspricht der nach der Figur 3. Die Anordnung ist aber selbstverständlich spiegelbildlich, da der Magnet 50 dem Stator 11 zugewandt auf der Trägerplatte 52 angeordnet sein muß. Wie aus der Figur 4 ersichtlich, ragt nun die Welle 33 mit einem Fortsatz 55 durch die Trägerplatte 52 des Rotors 12 hindurch und ist am Stator 11 in der Öffnung 31 des Fortsatzes 30 des Statorteils 13 drehbar gelagert.

Sowohl die Trägerplatte 52 als auch die beiden Statorteile 13, 14 sind aus magnetisch leitfähigen Materialien hergestellt. Um einen geschlossenen Magnetkreis zu erreichen, muß die Welle 33 oder zumindest ihr Fortsatz 55 auch aus magnetisch leitfähigem Material bestehen.

In der Figur 8 ist der Stator 11 mit den beiden Statorteilen 13, 14 in perspektivischer Darstellung dargestellt. Die Figuren 5 bis 7 stellen hierbei Draufsichten auf den Stator 11 entsprechend der Figur 8 dar. Aus der Figur 8 sind die unterschiedlichen Größen der vier Distanzspalte bzw. des Meßspaltes M1 unter der Annahme, daß es sich hierbei jeweils um Luftspalte handelt, erkennbar. Die Figur 5 zeigt die oben erwähnte Variante, daß der Fortsatz 17 des Endes 16 des Statorteils 14 mit der dem Ende 16 abgewandten Kante des Endes 18 des Stators 13 endet. Die überlappenden Enden 17 und 18 der dazwischen befindlichen Spalte M1 ist auch im Teilschnitt der Figur 7 erkennbar.

In der Figur 9 ist nun eine besondere Ausgestaltung dargestellt, die eine Konzentration des Magnetflusses des Magneten 50 im Bereich des Meßspaltes M1 ermöglicht. Dies wird dadurch erreicht, daß der empfindliche Bereich des magnetfeldempfindlichen Elements 20 möglichst im Bereich des konzentrierten, d.h. des stärksten Magnetflusses angeordnet ist. Hierzu weist der Träger 60 der Leiterplatte 24 eine Ausnehmung 61 auf, die größer oder fluchtend ist zu einer Ausnehmung 62 in der Leiterplatte 24. Durch diese beiden Ausnehmungen 61, 62 ragt das Ende 18 des Statorteils 13 hindurch und schließt in etwa bündig mit der Oberfläche der Leiterplatte 24 ab. Über die Stirnseite des Endes 18 des Statorteils 13, d.h. im Meßspalt M1 ist nun das magnetfeldempfindliche Element 20 möglichst zentrisch über der Stirnseite des Fortsatzes 18 mit seinem sensitivsten Bereich angeordnet. Durch diese Ausnehmungen 61 im Träger 60 und die Ausnehmung 62 in der Leiterplatte 24 ist es ferner möglich, daß der Meßspalt M1 bei dieser Ausführung nach der Figur 9 nahezu nur durch die Dicke des magnetflußempfindlichen Elements 20 bestimmt wird. Dieser sehr kleine Meßspalt M1 hat den Vorteil, daß bereits bei Magneten mit kleiner Magnetkraft, die sich z.B. durch eine kleine Baugröße ergeben, ein maximaler Magnetfluß und somit ein deutliches Meßsignal ergibt. Ergänzend sein noch angemerkt, daß auch in der Figur 9 das Ende 16 des Statorteils 14 am Träger 60 und an der Leiterplatte 24 entlang in eine zweite Ebene umgebogen ist, so daß sich der Fortsatz 17 des Statorteils 14 in einer parallel zum übrigen Bereich des Statorteils 13 bzw. 14 befindet.

In der Figur 14 ist der Verlauf der Kennlinie der magnetischen Induktion B im Element 20 z.B. einem Hall-Element über dem Drehwinkel α der Achse 33 dargestellt. Es ist erkennbar, daß bei einem Drehwinkel α von 0° die Induktion B ebenfalls 0 beträgt, während sie beim maximalen Drehwinkel α auch den maximalen Induktionswert erreicht. Bei diesem Ausführungsbeispiel ist der maximale Meßwinkelbereich bei ca. 180° erreicht. Die Stellung des Sensors 10 bei einem Drehwinkel von 0° ist in den Figuren 10 und 11 dargestellt, wobei auch hier aus Deutlichkeitsgründen in der Figur 11 der Magnet 50 ohne der Trägerplatte 52 eingezeichnet ist. Aus der Figur 10 ist ersichtlich, daß der Magnetfluß des Magneten 50 durch die Trägerplatte 52 den Fortsatz 55 der Welle 33 über einen geringen Lagerungsspalt zum Statorteil 13 verläuft und von dort über einen geringen Spalt, der zur Beweglichkeit des Rotors gegenüber dem Stator dient, zum Permanentmagneten zurückführt. Wie insbesondere aus der Figur 11 ersichtlich ist, ist der Magnetfluß aufgrund der Spalte 35, 41, 40, 43 so gesteuert, daß er bei einem Drehwinkel von 0° nicht durch das Element 20 verläuft, so daß im Element 20 keine magnetische Induktion B erfolgen kann. Wird nun die Achse 33 und somit die Trägerplatte 52 mit den Magneten 50 gedreht, so wird der durch das Element 20 verlaufende magnetische Fluß vergrößert, und es ergibt sich die in der Figur 14 dargestellte lineare Meßlinie. Die Einstellung des Sensors bei maximalem Drehwinkel α ist in den Figuren 12 und 13 dargestellt. Auch hier ist in der Figur 13 aus Übersichtlichkeitsgründen keine Trägerplatte 52 eingezeichnet. Wie aus der Figur 12 ersichtlich ist, erfolgt beim maximalen Drehwinkel α der Magnetfluß vom Permanentmagneten 50 durch die Trägerplatte 52, den Fortsatz 55 der Welle 33, über den Lagerungsspalt der Welle 33 des Statorteils 13 in das Statorteil 13 hinein. Von dort wird aufgrund der Spalte 41, 35, 43 der Magnetfluß aufgeteilt und fließt teilweise über den Spalt 40 zum Magneten 50 zurück. Etwa die Hälfte des Magnetflusses verläuft im Statorteil 13 in das Ende 18, von dort durch das Element 20 zum Fortsatz 17 des Endes 16 des Statorteils 13. Vom Statorteil 14 erfolgt der Magnetfluß über den bereits oben erwähnten, geringen Spalt zurück zum Magneten 50. Der gesamte Magnetfluß wird somit durch das Element 20 geführt, so daß im Element 20 eine maximal mögliche magnetische Induktion B bewirkt wird.

In einfacher Weise ist nun der Einbau des oben beschriebenen Sensors in eine Drosselklappenstelleinheit möglich. In dieser Einheit wird der Drehwinkel einer Drosselklappe für eine Motorsteuerung erfaßt. Die beiden Statorteile 13, 14 können dann direkt im Deckel der Drosselklappenstelleinheit angeordnet sein.

Desweiteren ist ein eigenständiger Sensor für das Erfassen des Brems- bzw. Gaspedals oder weiteren Anwendungen darstellbar.

## Patentansprüche

1. Messvorrichtung zur berührungslosen Erfassung eines Drehwinkels (α) zwischen einem Stator (11) und einem Rotor (12), wobei auf dem Rotor (12) ein Magnet (50) angeordnet ist, wobei der Rotor (12) mit einer Welle (33) in Wirkverbindung steht, wobei der Magnet (50) in Richtung der Achse der Welle (33) polarisiert ist, wobei sich zwischen Stator (11) und Rotor (12) ein Spalt (L1) befindet und der Stator (11) aus mindestens zwei Teilen (13, 14) besteht, die durch mindestens einen magnetisch nicht leitenden Spalt (35, 40, 43, 44, M1) getrennt sind, wobei sich in mindestens einem der besagten, als Messspalt (M1) bezeichneten Spalte (35, 40, 43, 44, M1) mindestens ein magnetfeldempfindliches Element (20) befindet, wobei der Rotor (12) und der Stator (11) scheibenförmig ausgebildet sind, **dadurch gekennzeichnet, dass** die Enden (18, 17) mindestens zweier Statorteile (13, 14) in zwei sich in Achsrichtung der Welle (33) übereinander befindenden Ebenen angeordnet sind und das magnetfeldempfindliche Element (20) zwischen den Enden (17, 18) des Stators (12) in dem besagten Messspalt (M1) derart angeordnet ist, daß der Magnetfluss in Achsrichtung der Welle (33) zugeführt wird.

2. Meßvorrichtung nach Anspruch 1, **dadurch gekennzeichnet, daß** bei den sich zwischen den Teilen (13, 14) des Stators (11) befindenden Spalten ein erster Spalt (43) größer als ein zweiter Spalt (35) ist.

3. Meßvorrichtung nach Anspruch 1 oder 2, **dadurch gekennzeichnet, daß** bei den sich zwischen den Teilen (13, 14) des Stators (11) befindenden Spalten ein vierter Spalt (44) größer als der Meßspalt (M1) ausgebildet ist.

4. Messvorrichtung nach einem der Ansprüche 1 bis 3, **dadurch gekennzeichnet, dass** die Welle (33) einen Fortsatz (55) aufweist, wobei der Fortsatz (55) und der Rotor (12, 52) aus weichmagnetischem Material bestehen.

5. Meßvorrichtung nach einem der Ansprüche 1 bis 4, **dadurch gekennzeichnet, daß** das Ende (17) des einen Statorteils (14) das Ende (18) des anderen Statorteils (13) mit einem Abstand (U1) überlappt.

6. Meßvorrichtung nach einem der Ansprüche 1 bis 5, **dadurch gekennzeichnet, daß** ein Teil (13) des Stators (11) einen zweiten Fortsatz (30) aufweist, in den die Welle (33), insbesondere deren Fortsatz (55) ragt.

## Claims

1. Measurement apparatus for non-contacting detection of a rotation angle (α) between a stator (11) and a rotor (12), with a magnet (50) being arranged on the rotor (12), with the rotor (12) being operatively connected to a shaft (33), with the magnet (50) being polarized in the direction of the axis of the shaft (33), with a gap (L1) being located between the stator (11) and the rotor (12), and with the stator (11) being formed from at least two parts (13, 14) which are separated by at least one magnetically impermeable gap (35, 40, 43, 44, M1), with at least one element (20) which is sensitive to magnetic fields being located in at least one of the said gaps (35, 40, 43, 44, M1), which are referred to as a measurement gap (M1), with the rotor (12) and the stator (11) being in the form of discs, **characterized in that** the ends (18, 17) of at least two stator parts (13, 14) are arranged on two planes which are located one above the other in the axial direction of the shaft (33) and the element (20) which is sensitive to magnetic fields is arranged between the ends (17, 18) of the stator (12) in the said measurement gap (M1) in such a way that the magnetic flux is carried in the axial direction of the shaft (33).

2. Measurement apparatus according to Claim 1, **characterized in that**, of the gaps which are located between the parts (13, 14) of the stator (11), a first gap (43) is larger than a second gap (35).

3. Measurement apparatus according to Claim 1 or 2, **characterized in that**, of the gaps which are located between the parts (13, 14) of the stator (11), a fourth gap (44) is larger than the measurement gap (M1).

4. Measurement apparatus according to one of Claims 1 to 3, **characterized in that** the shaft (33) has a projection (55) with the projection (55) and the rotor (12, 52) being made of soft-magnetic material.

5. Measurement apparatus according to one of Claims 1 to 4, **characterized in that** the end (17) of the first stator part (14) overlaps the end (18) of the other stator part (13) by a distance (U1).

6. Measurement apparatus according to one of Claims 1 to 5, **characterized in that** a part (13) of the stator (11) has a second projection (30), into which the shaft (33), in particular its projection (55), projects.

## Revendications

1. °) Dispositif de mesure pour la saisie sans contact d'un angle de rotation (α) entre un stator (11) et un rotor (12) selon lequel
- le rotor (12) porte un aimant (50),
- le rotor (12) coopère avec un axe (33),
- l'aimant (50) est polarisé dans la direction de l'axe géométrique de l'axe (33),
- le stator (11) et le rotor (12) sont séparés d'un intervalle (L1) et le stator (11) se compose d'au moins deux parties (13, 14) séparées par au moins un intervalle (35, 40, 43, 44, M1) non conducteur magnétique,
dans au moins l'un des intervalles (35, 40, 43, 44, M1) appelé intervalle de mesure, se trouve au moins un élément sensible à un champ magnétique (20),
le rotor (12) et le stator (11) étant en forme de disque,
**caractérisé en ce que**
les extrémités (18, 17) d'au moins deux parties de stator (13, 14) sont situées dans des plans superposés dans la direction axiale de l'arbre (33) et l'élément sensible au champ magnétique (20) est installé entre les extrémités (17, 18) du stator (12) dans l'intervalle de mesure (M1) pour que le flux magnétique arrive dans la direction axiale de l'axe (33).

2. Dispositif de mesure selon la revendication 1,
**caractérisé en ce que**
le premier (43) des deux intervalles entre les deux parties (13, 14) du stator (11) est plus grand que le second intervalle (35).

3. Dispositif de mesure selon la revendication 1 ou 2,
**caractérisé en ce que**
pour les intervalles entre les parties (13, 14) du stator (11), il y a un quatrième intervalle (44) plus grand que l'intervalle de mesure (M1).

4. Dispositif de mesure selon l'une des revendications 1 à 3,
**caractérisé en ce que**
l'axe (33) comporte un prolongement (55),
le prolongement (55) et le rotor (12, 52) étant en une matière à aimantation douce.

5. Dispositif de mesure selon l'une des revendications 1 à 4,
**caractérisé en ce que**
l'extrémité (17) d'une partie (14) du stator chevauche l'extrémité (18) de l'autre partie (13) du stator sur une distance (U1).

6. Dispositif de mesure selon l'une des revendications 1 à 5,
**caractérisé en ce qu'**
une partie (13) du stator (11) comporte un second prolongement (30) et l'axe (33), notamment son prolongement (55), pénètre dans ce prolongement.
